# EUROPÄISCHE PATENTSCHRIFT

(11) **EP 3 104 023 B1**
(45) Veröffentlichungstag und Bekanntmachung des Hinweises auf die Patenterteilung: **07.10.2020**
(21) Anmeldenummer: 16173185.6
(22) Anmeldetag: 06.06.2016
(51) Int. Cl.: F16B 7/04

(54) **BEFESTIGUNGSVORRICHTUNG ZUM BEFESTIGEN MINDESTENS EINER ANBAUEINRICHTUNG AN EINER NUT, EINE ANBAUEINRICHTUNG UND EIN BEFESTIGUNGSSYSTEM MIT EINER SOLCHEN BEFESTIGUNGSVORRICHTUNG**
FIXING DEVICE FOR FIXING AT LEAST ONE ATTACHMENT TO A GROOVE, AN ATTACHMENT AND A FASTENING SYSTEM WITH SUCH A FIXING DEVICE
DISPOSITIF DE FIXATION POUR LA FIXATION D'AU MOINS UN DISPOSITIF DE MONTAGE À UNE RAINURE, DISPOSITIF DE MONTAGE ET SYSTÈME DE FIXATION AVEC UN TEL DISPOSITIF DE FIXATION

(30) Priorität: 12.06.2015 DE 102015109439
(43) Veröffentlichungstag der Anmeldung: 14.12.2016
(73) Patentinhaber: Wesemann GmbH, 28857 Syke (DE)
(72) Erfinder: Schlottke, Torsten, 28857 Syke (DE)
(74) Vertreter: Zacco Patent- und Rechtsanwalts GmbH

(56) Entgegenhaltungen:
- EP-A1- 0 675 292
- EP-A2- 1 112 894
- DE-A1- 3 131 537
- FR-A1- 2 454 551

## Beschreibung

Die Erfindung betrifft eine Anbaueinrichtung zum Befestigen an einer Nut, mit einer Befestigungsvorrichtung mit mindestens einer Eingreifeinrichtung zum Eingreifen in die Nut, wobei die Eingreifeinrichtung mindestens ein erstes Eingreifelement und mindestens ein bewegbares zweites Eingreifelement hat und zum Verschwenken des zweiten Eingreifelementes ein Schwenklager vorgesehen ist, wobei dem zweiten Eingreifelement ein Schwenkhebel zugeordnet ist, der ein Betätigungselement aufweist. Des Weiteren betrifft die Erfindung ein Befestigungssystem mit einer solchen Anbaueinrichtung.

Eine derartige Befestigungsvorrichtung ist beispielsweise aus der FR 2454551 A1 bekannt. Die US 2013/0121760 A1 und die EP 0675292 zeigen eine ähnliche Befestigungsvorrichtung.

Des Weiteren ist aus der DE 20 2009 006 776 U1 bekannt, dass beispielsweise Nutsteine oder starre Profile in eine Nut eingeführt, um eine Anbaueinrichtung an der Nut zu befestigen.

Nachteilig ist hierbei eine aufwändige, unflexible und/oder komplizierte Installation. Beispielsweise müssen Nutsteine und/oder Profile seitlich vom offenen Ende her in die Nut eingeführt werden. Alternativ können längliche Nutsteine verwendet werden, die in einer Längsausrichtung in die Nut direkt eingeführt werden können. Diese Nutsteine müssen jedoch sodann innerhalb der Nut verdreht werden, so dass nach Verschrauben mit einer Anbaueinrichtung ein zuverlässiger Halt gewährleistet wird. Dies erfordert jedoch ein umständliches Hantieren innerhalb der nicht oder nur schwer zugänglichen Nut.

Es ist die der Erfindung zugrunde liegende Aufgabe, eine Befestigungsvorrichtung, eine Anbaueinrichtung und/oder ein Befestigungssystem der eingangs genannten Art derart weiterzuentwickeln, dass ein Befestigen einer Anbaueinrichtung an einer Nut erleichtert ist. Insbesondere soll eine alternative Konstruktion bereitgestellt werden.

Die der Erfindung zugrunde liegende Aufgabe wird mittels einer Anbaueinrichtung der eingangs genannten Art gelöst, bei der die Anbaueinrichtung modular ausgebildet ist und ein Funktionsmodul und ein Befestigungsmodul aufweist, das das erste Eingreifelement und das zweite Eingreifelement hat, wobei das Befestigungsmodul und das Funktionsmodul mittels einer Rastverbindung und/oder einer Steckverbindung lösbar miteinander verbindbar sind und das zweite Eingreifelement bei einer Verbindung des Funktionsmoduls mit dem Befestigungsmodul in einer Halteposition zum Halten der Anbaueinrichtung an der Nut gesichert ist.

Hierbei ist von Vorteil, dass die Eingreifeinrichtung mehrteilig, insbesondere zweiteilig, ausgebildet ist. Aufgrund der mehrteiligen Ausbildung der Eingreifeinrichtung mit einem ersten Eingreifelement und einem zweiten Eingreifelement kann mindestens ein Eingreifelement bewegbar ausgebildet sein. Aufgrund der Bewegbarkeit des zweiten Eingreifelementes sind Konstruktionen der Befestigungsvorrichtung realisierbar, so dass die Befestigung der Anbaueinrichtung an der Nut erleichtert ist. Insbesondere ist das erste Eingreifelement starr ausgebildet und/oder das zweite Eingreifelement ist in Bezug zu dem ersten Eingreifelement bewegbar ausgebildet.

Vorzugsweise kann die Eingreifeinrichtung aufgrund des bewegbaren zweiten Eingreifelementes eine erste Position und mindestens eine weitere Position einnehmen. Die erste Position kann als eine Ein- und Ausführposition ausgebildet sein. Hierbei befindet sich das zweite Eingreifelement in Bezug zu dem ersten Eingreifelement in einer derartigen Stellung, dass die Eingreifeinrichtung an einer beliebigen Stelle in die Nut, insbesondere durch einen Spalt, eingeführt werden kann. Die zweite Position der Eingreifeinrichtung kann als eine Halteposition ausgebildet sein. Insbesondere wird das zweite Eingreifelement nach dem Einführen der Eingreifeinrichtung in die Nut aus der Ein- und Ausführposition in die Halteposition bewegt. Insbesondere ist das zweite Eingreifelement in Bezug zu dem ersten Eingreifelement in der Halteposition in einer solchen Stellung, dass die Eingreifeinrichtung an und/oder in der Nut befestigt, insbesondere gehalten, ist. Vorzugsweise weist die Anbaueinrichtung die Eingreifeinrichtung auf. Somit kann die Anbaueinrichtung auf bequeme Weise an einer beliebigen Stelle der Nut an dieser befestigt werde. Vorzugsweise ist das erste Eingreifelement als ein starres erstes Eingreifelement ausgebildet. In einer alternativen Ausführungsform können sowohl das erste Eingreifelement als auch das zweite Eingreifelement bewegbar ausgebildet sein. Insbesondere ist das erste Eingreifelement in Bezug zu dem zweiten Eingreifelement bewegbar oder umgekehrt.

Gemäß einer Weiterbildung ist das erste Eingreifelement zum Hintergreifen eines ersten Steges und/oder das zweite Eingreifelement zum Hintergreifen eines zweiten Steges ausgebildet. Insbesondere ist das erste Eingreifelement und/oder das zweite Eingreifelement als ein Winkelelement und/oder L-förmig ausgebildet. Derartige Eingreifelemente sind kostengünstig herstellbar und ermöglichen eine ausreichende Befestigung der Anbaueinrichtung an der Nut. Vorzugsweise sind freie Enden des ersten Eingreifelementes und des zweiten Eingreifelementes, insbesondere in einer Halteposition zum Halten der Anbaueinrichtung an der Nut, voneinander abgewandt. Insbesondere erstrecken sich der erste Steg und/oder der zweite Steg in Längsrichtung der Nut.

Vorzugsweise weist ein Profil, eine Tragschiene und/oder ein Funktionskanal die Nut, den ersten Steg und/oder den zweiten Steg auf. Vorzugsweise ist die Nut als eine sogenannte Innennut ausgebildet. Hierbei können der erste Steg und der zweite Steg einander zugewandt und/oder zum Bilden der Nut voneinander beabstandet sein. Somit ist zwischen den beiden einander zugewandten Stegen ein Spalt angeordnet, der einen Zugang, insbesondere für das erste Eingreifelement und/oder das zweite Eingreifelement, in die Nut ermöglicht. Der Funktionskanal kann als ein Medienkanal ausgebildet sein. Insbesondere weist der Funktionskanal selbst eine Funktionsnut auf. An die Funktionsnut kann eine separate Tragschiene befestigt werden. Die Nut der Tragschiene und/oder die Funktionsnut des Funktionskanals kann als die Nut zum Befestigen einer Anbaueinrichtung mittels der Befestigungsvorrichtung ausgebildet sein. Vorzugsweise ist das zweite Eingreifelement aufgrund einer Verschwenkung, Verdrehung und/oder Verschiebung bewegbar. Somit sind zum Bewegen des zweiten Eingreifelementes verschiedene Bewegungsmechanismen denkbar.

Gemäß einer Weiterbildung ist zum Verschwenken des zweiten Eingreifelementes ein Schwenklager vorgesehen. Insbesondere ist das Schwenklager dem zweiten Eingreifelement zugeordnet. Vorzugsweise ist das Schwenklager des zweiten Eingreifelementes an einer Schwenkachse drehbar gelagert. Die Schwenkachse kann parallel zu der Nut und/oder einem Steg, insbesondere zur Längsausrichtung eines Profils, einer Tragschiene und/oder eines Funktionskanals, ausgerichtet sein. Aufgrund einer Verschwenkbarkeit des zweiten Eingreifelementes ist ein Befestigen und/oder Lösen der Anbaueinrichtung an bzw. von der Nut auf besonders einfache und bequeme Weise realisierbar.

Nach einer Weiterbildung ist dem zweiten Eingreifelement ein Schwenkhebel zugeordnet. Insbesondere erstreckt sich der Schwenkhebel ausgehend von einem Schwenklager weg. Mittels des Schwenkhebels ist die Bedienbarkeit der Befestigungsvorrichtung und/oder die Verschwenkbarkeit des zweiten Eingreifelementes verbessert. Der Schwenkhebel kann ausgehend von einem Schwenklager zum Bereitstellen eines Hebelmechanismus länger als das zweite Eingreifelement sein. Somit kann mittels des Schwenkhebels eine Hebelwirkung realisiert werden. Hierdurch können mittels geringer Bedienkräfte hinreichend große Haltekräfte auf das zweite Eingreifelement übertragen werden. Vorzugsweise ist ein von dem zweiten Eingreifelement und/oder dem Schwenklager abgewandtes Ende des Schwenkhebels zum lösbaren Fixieren des Schwenkhebels in einer Halteposition der Anbaueinrichtung ausgebildet. Hierdurch kann die Gefahr einer unerwünschten Bewegung des zweiten Eingreifelementes aus der Halteposition heraus reduziert oder vermieden werden.

Vorzugsweise ist dem zweiten Eingreifelement eine Fixiereinrichtung zum lösbaren Fixieren des zweiten Eingreifelementes und/oder eines Schwenkhebels in einer Halteposition zum Halten der Anbaueinrichtung an der Nut zugeordnet. Insbesondere ist die Fixiereinrichtung zum Herstellen einer lösbaren Verbindung mit der Anbaueinrichtung ausgebildet. Die Fixiereinrichtung kann an einem von dem zweiten Eingreifelement und/oder von einem Schwenklager abgewandten Ende des Schwenkhebels angeordnet sein. Die Fixiereinrichtung kann zum Herstellen einer lösbaren Rastverbindung ein erstes Rastelement zum Zusammenwirken mit einem zu ersten Rastelement korrespondierend ausgebildeten weiteren Rastelement der Anbaueinrichtung aufweisen. Somit lässt sich auch die Verbindung der Fixiereinrichtung mit der Anbaueinrichtung bzw. ein Festlegen der Lage der Fixiereinrichtung an der Anbaueinrichtung auf einfache und bequeme Weise realisieren.

Vorzugsweise ist die Fixiereinrichtung mittels einer Schwenkverbindung und/oder einer elastischen Verbindung mit dem Schwenkhebel verbunden. Hierbei kann die bewegliche Verbindung der Fixiereinrichtung mit dem Schwenkhebel einstückig ausgebildet sein. Vorzugsweise weist die Befestigungsvorrichtung ein Betätigungselement zum manuellen Lösen und/oder Herstellen einer Verbindung der Eingreifeinrichtung mit der Nut und/oder der Fixiereinrichtung mit der Anbaueinrichtung auf. Der Schwenkhebel und/oder die Fixiereinrichtung kann ein solches Betätigungselement aufweisen oder als ein solches Betätigungselement ausgebildet sein. Insbesondere weist die Fixiereinrichtung ein Betätigungselement zum, vorzugsweise einhändigen, manuellen Lösen und/oder Herstellen einer Verbindung mit der Anbaueinrichtung und/oder zum Bewegen des zweiten Eingreifelementes auf. Das Betätigungselement kann stegartig ausgebildet sein. Vorzugsweise erstreckt sich das Betätigungselement und das erste Rastelement der Fixiereinrichtung ausgehend von der Schwenkverbindung und/oder der elastischen Verbindung in zwei voneinander abgewandte Richtungen. Die Länge des Betätigungselementes ausgehend von der Schwenkverbindung und/oder der elastischen Verbindung kann größer sein als die entsprechende Länge des ersten Rastelementes der Fixiereinrichtung. Hierdurch ist eine Hebelwirkung realisierbar, wodurch die Betätigung erleichtert ist.

Nach einer weiteren auch unabhängigen und selbstständig von der vorliegenden Erfindung denkbaren Ausführungsform ist die Anbaueinrichtung modular und/oder mindestens zweistückig ausgebildet. Insbesondere weist die Anbaueinrichtung ein Funktionsmodul und ein Befestigungsmodul auf. Das Befestigungsmodul kann die Eingreifeinrichtung aufweisen. Insbesondere hat das Befestigungsmodul das erste Eingreifelement und das zweite Eingreifelement. Somit kann das Befestigungsmodul unabhängig von dem Funktionsmodul an der Nut befestigt werden. Vorzugsweise sind das Befestigungsmodul und das Funktionsmodul lösbar miteinander verbindbar. Insbesondere sind das Befestigungsmodul und das Funktionsmodul mittels einer Rastverbindung und/oder einer Steckverbindung lösbar miteinander verbindbar. Demnach kann zunächst das Befestigungsmodul mittels der Befestigungsvorrichtung an der Nut befestigt werden und sodann kann das Funktionsmodul mit dem Befestigungsmodul verbunden werden. Die Anbaueinrichtung und/oder das Funktionsmodul kann je nach Anforderung in verschiedenen Ausführungen vorliegen, um unterschiedliche Funktionen und/oder Anbauelemente bereitzustellen.

Gemäß einer Weiterbildung ist bei einer Verbindung des Funktionsmoduls mit dem Befestigungsmodul das zweite Eingreifelement in einer Halteposition zum Halten der Anbaueinrichtung an der Nut gesichert. Somit kann das Funktionsmodul nicht nur zum Bereitstellen einer gewünschten Funktionalität, sondern zugleich auch zum zusätzlichen Sichern der Verbindung des Befestigungsmoduls an der Nut dienen. Insbesondere ist eine Fixiereinrichtung zum Fixieren des zweiten Eingreifelementes in der Halteposition mittels des Funktionsmoduls gegen eine Betätigung zum Lösen und/oder Verschwenken des zweiten Eingreifelementes blockiert. Hierzu kann ein Teil des Funktionsmoduls, insbesondere eine Innenseite einer Multifunktionsseite, an der Fixiereinrichtung und/oder einem Betätigungselement der Fixiereinrichtung anliegen. Aufgrund des Anliegens eines Teils und/oder eines Abschnittes des Funktionsmoduls ist eine Bewegung der Fixiereinrichtung und/oder des Betätigungselementes in eine Richtung zum Lösen der Fixiereinrichtung und/oder des zweiten Eingreifelementes blockiert.

Die Anbaueinrichtung, das Funktionsmodul und/oder das Befestigungsmodul kann eine Kabelführung aufweisen oder als eine Kabelführung ausgebildet sein.

Gemäß einer Weiterbildung ist das Funktionsmodul austauschbar. Somit können verschiedenartig ausgebildete Funktionsmodule mit dem Befestigungsmodul verbunden werden. Hierdurch ergibt sich eine hohe Flexibilität und Vielfalt.

Gemäß einer Weiterbildung hat das Funktionsmodul mindestens ein erstes Steckelement und das Befestigungsmodul mindestens ein zu dem ersten Steckelement korrespondierend ausgebildetes zweites Steckelement. Beispielsweise ist das erste Steckelement hakenartig ausgebildet, wobei das zweite Steckelement als eine korrespondierend ausgebildete Aufnahme ausgebildet sein kann. Vorzugsweise ist das erste Steckelement im Bereich einer Oberseite des Funktionsmoduls und/oder das zweite Steckelement im Bereich einer Oberseite des Befestigungsmoduls angeordnet.

Insbesondere weist das Funktionsmodul mindestens ein erstes Rastmittel und das Befestigungsmodul ein zu dem ersten Rastmittel korrespondierend ausgebildetes zweites Rastmittel auf. Das erste Rastmittel kann im Bereich einer Unterseite des Funktionsmoduls und das zweite Rastmittel im Bereich einer Unterseite des Befestigungsmoduls angeordnet sein. Vorzugsweise wird zum Herstellen der Verbindung des Funktionsmoduls mit dem Befestigungsmodul zunächst die Steckverbindung mittels des ersten Steckelementes und des zweiten Steckelementes hergestellt. Anschließend wird eine zusätzliche Rastverbindung mittels des ersten Rastmittels und dem zweiten Rastmittel hergestellt. Das erste Rastmittel und/oder das zweite Rastmittel kann elastisch gelagert sein. Insbesondere weist das elastisch gelagerte erste Rastmittel und/oder das zweite Rastmittel ein Betätigungsmittel zum manuellen Lösen der Rastverbindung und/oder zum manuellen Herstellen der Rastverbindung auf. Hierbei kann das Betätigungsmittel stegartig ausgebildet sein.

Vorzugsweise ist die Befestigungsvorrichtung, die Eingreifeinrichtung, das erste Eingreifelement, das zweite Eingreifelement, der Schwenkhebel, die Fixiereinrichtung, das Betätigungselement, das erste Rastmittel, das zweite Rastmittel und/oder das Betätigungsmittels aus einem Kunststoff, insbesondere aus Polyamid, vorzugsweise glasfaserverstärkt, hergestellt.

Gemäß einer auch eigenständig und unabhängig von der vorliegenden Erfindung denkbaren Ausführungsform weist die Anbaueinrichtung, das Befestigungsmodul und/oder das Funktionsmodul mindestens eine Multifunktionsseite auf. Insbesondere ist die Multifunktionsseite abhängig von der gewünschten Funktionalität individuell gestaltbar und/oder ausrüstbar. Insbesondere hat ein Funktionsmodul eine von einem Befestigungsmodul abgewandte Multifunktionsseite. Vorzugsweise ist eine Frontseite und/oder eine Unterseite des Funktionsmoduls als die Multifunktionsseite ausgebildet. Insbesondere weist die Multifunktionsseite eine Montageplatte, ein Anbauelement, einen Halter, einen Adapter, eine Kabelführung, mindestens einen Medienanschluss, einen Monitor, eine Magnettafel, einen Instrumentenhalter, einen Werkzeughalter, einen Pipettenhalter, einen Getränkehalter, einen Boxenhalter, einen Entsorgungsbeutelhalter und/oder einen Seifenspenderhalter auf. Darüber hinaus sind auch weitere Ausbildungen der Multifunktionsseite denkbar.

Nach einer weiteren auch unabhängig und eigenständig von der vorliegenden Erfindung denkbaren Ausführung ist ein Befestigungssystem mit der Befestigungsvorrichtung und/oder mit der Anbaueinrichtung vorgesehen. Hierbei dient eine Nut zum Befestigen mindestens einer Anbaueinrichtung. Die Anbaueinrichtung kann in einer Halteposition der Befestigungsvorrichtung, der Eingreifeinrichtung und/oder des zweiten Eingreifelementes ortsfest oder in Längsrichtung der Nut verschiebbar gehalten sein. Hierbei ist von Vorteil, dass die Anbaueinrichtung, insbesondere das Befestigungsmodul, mittels der Befestigungsvorrichtung auf einfache und bequeme Weise an einer beliebigen Stellte mit der Nut befestigbar ist. Insbesondere ist der Befestigungsvorrichtung ein Schnellverschluss, vorzugsweise mit einem Schnappmechanismus, realisierbar. Es können ein oder mehrere Anbaueinrichtungen, Anbauelemente und/oder Zubehörteile an der Nut befestigt werden.

Gemäß einer Weiterbildung ist die Nut in einem Profil, einer Tragschiene und/oder in einer Wand eines Funktionskanals, insbesondere eines Medienkanals, integriert. Der Funktionskanal kann eine Funktionsnut aufweisen, an der das Profil und/oder die Tragschiene befestigbar ist.

Gemäß einer auch eigenständig und unabhängig von der vorliegenden Erfindung denkbaren Ausführungsform weist das Profil, insbesondere eine Tragschiene, eine, vorzugsweise integrierte, Beleuchtungseinrichtung auf. Hierbei ist von Vorteil, dass eine Installation einer separaten Lichtquelle verzichtbar ist. Es wird kein zusätzlicher Raum durch die Beleuchtungseinrichtung beansprucht, wodurch insbesondere ein Arbeitsraum eines Arbeitsplatzes nicht unnötig eingeschränkt wird. Die Gefahr einer unbeabsichtigten Beschädigung der Beleuchtungseinrichtung ist aufgrund der in das Profil integrierten Bauweise der Beleuchtungseinrichtung erheblich reduziert. Insbesondere realisiert das Profil eine Doppelfunktion, indem das Profil mindestens eine Nut zum Befestigen mindestens einer Anbaueinrichtung bereitstellt und gleichzeitig eine Beleuchtung, insbesondere eines Arbeitsplatzes, ermöglicht.

Nach einer weiteren Ausführungsform weist die Beleuchtungseinrichtung und/oder das Profil eine lichttransparente Abdeckung auf. Vorzugsweise ist im Rahmen der vorliegenden Anmeldung unter einer lichttransparenten Abdeckung eine für elektromagnetische Wellen und/oder Licht, insbesondere im sichtbaren Wellenlängenbereich, durchlässige Abdeckung zu verstehen. Insbesondere ist die lichttransparente Abdeckung durchscheinend, durchsichtig, klarsichtig, transluzent oder matt ausgebildet. Die lichttransparente Abdeckung kann zum Erzeugen einer diffusen Lichtabstrahlung ausgebildet sein. Insbesondere ist die lichttransparente Abdeckung an einer Seite und/oder an einer Unterseite des Profils angeordnet. Bei einer Anordnung der lichttransparenten Abdeckung an der Unterseite des Profils ist eine Beleuchtung und/oder Ausleuchtung eines Arbeitsplatzes einfach und effektiv realisierbar. Insbesondere ist eine Blendung einer Person bei einer Anordnung der lichttransparenten Abdeckung an einer Unterseite des Profils vermeidbar. Das Licht der Beleuchtungseinrichtung kann im Wesentlichen in einer vertikalen Richtung auf einen Arbeitsplatz, insbesondere auf einen Arbeitstisch und/oder in Richtung eines Bodens, abgestrahlt werden. Vorzugsweise ist die lichttransparente Abdeckung quer und/oder rechtwinklig zu einer weiteren Seite des Profils mit der Nut ausgerichtet. Die Nut kann einer Frontseite des Profils zugeordnet sein. Vorzugsweise erstreckt sich die lichttransparente Abdeckung im Wesentlichen über die gesamte Längsachse des Profils.

Gemäß einer Weiterbildung ist die lichttransparente Abdeckung formschlüssig und/oder kraftschlüssig, insbesondere mittels einer Steckverbindung und/oder Rastverbindung, mit dem Profil verbindbar. Somit kann auf zusätzliche Befestigungsmittel, insbesondere auf Schrauben und/oder Nieten, verzichtet werden. Vorzugsweise ist die lichttransparente Abdeckung lösbar und/oder austauschbar mit dem Profil verbindbar. Somit kann die lichttransparente Abdeckung bei Bedarf einfach demontiert und/oder remontiert werden. Beispielsweise können verschiedene lichttransparente Abdeckungen, insbesondere in unterschiedlichen Farbtönen und/oder mit unterschiedlichen Lichtdurchlässigkeitsgraden, vorgehalten werden, die je nach Bedarf in das Profil einsetzbar sind. Insbesondere ist die lichttransparente Abdeckung in Längsrichtung des Profils in das Profil einsteckbar. Somit kann die lichttransparente Abdeckung von einem Ende des Profils aus in dieses eingeführt und/oder aus diesem herausgeführt werden
Vorzugsweise ist innerhalb des Profils eine Lichtquelle angeordnet. Insbesondere ist die Lichtquelle in einer Kammer des Profils angeordnet. Vorzugsweise wird die Kammer mit der Lichtquelle nach außen mittels der lichttransparenten Abdeckung verschlossen und/oder abgedeckt. Die Lichtquelle kann einer Innenseite der lichttransparenten Abdeckung zugewandt sein. Vorzugsweise ist die Lichtquelle als ein LED-Band ausgebildet. Ein LED-Band kann die Einstellung verschiedener Lichtfarben ermöglichen. Insbesondere ist mittels eines LED-Bandes eine lange Betriebsdauer erzielbar.

Gemäß einer Weiterbildung weist das Profil im Querschnitt einen mehrkammerigen Aufbau auf. Insbesondere hat das Profil im Querschnitt gesehen mehrere, mindestens zwei Kammern. Vorzugsweise hat das Profil eine erste Kammer und mindestens eine weitere Kammer. Insbesondere ist der ersten Kammer die Nut und der weiteren Kammer die Beleuchtungseinrichtung zugeordnet.

Von besonderem Vorteil ist eine Verwendung einer erfindungsgemäßen Anbaueinrichtung und/oder eines erfindungsgemäßen Befestigungssystems in einem Labor, einem Unterrichtsraum und/oder einem Sanitärraum. Insbesondere ist ein bequemes und/oder flexibles Ausrüsten mindestens eines Arbeitsplatzes ermöglicht. Hierbei ermöglicht eine Befestigungsvorrichtung ein einfaches, schnelles, zuverlässiges und bequemes Befestigen und/oder Lösen mindestens einer Anbaueinrichtung an einer Nut. Darüber hinaus ist eine hohe Flexibilität gegeben, da je nach Anforderung beliebige weitere Anbaueinrichtungen installiert oder ausgetauscht werden können. Insbesondere kann ein standardisiertes Befestigungsmodul bereitgestellt werden, an dem je nach Anforderung verschiedenartig ausgebildete Funktionsmodule anordenbar und/oder befestigbar sind. Vorzugsweise dient ein Profil mit einer integrierten Beleuchtungseinrichtung zum Beleuchten und/oder Ausrüsten mindestens eines Arbeitsplatzes.

Nachfolgend wird die Erfindung anhand der Figuren näher erläutert. Es zeigen:
- Fig. 1: eine perspektivische, transparente Seitenansicht einer erfindungsgemäßen Anbaueinrichtung mit einer Befestigungsvorrichtung,
- Fig. 2: eine perspektivische, transparente Seitenansicht eines Befestigungsmoduls mit der Befestigungsvorrichtung gemäß Fig. 1,
- Fig. 3: eine perspektivische, transparente Seitenansicht eines Funktionsmoduls zum Befestigen an dem Befestigungsmodul gemäß Fig. 1 und 2,
- Fig. 4: eine Rückansicht der erfindungsgemäßen Anbaueinrichtung mit der Befestigungsvorrichtung gemäß Fig. 1,
- Fig. 5: eine geschnittene Seitenansicht der erfindungsgemäßen Anbaueinrichtung mit der Befestigungsvorrichtung gemäß Fig. 1,
- Fig. 6: einen Ausschnitt einer Seitenansicht der erfindungsgemäßen Anbaueinrichtung mit der Befestigungsvorrichtung gemäß Fig. 1 an einer Nut,

- Fig. 7: eine Frontansicht eines Befestigungssystems mit mehreren erfindungsgemäßen Anbaueinrichtungen, die jeweils eine Befestigungsvorrichtung aufweisen,
- Fig. 8: eine Draufsicht auf das Befestigungssystem gemäß Fig. 8, und
- Fig. 9: eine geschnittene, perspektivische Seitenansicht eines Profils für ein Befestigungssystem gemäß Fig. 7 und 8.

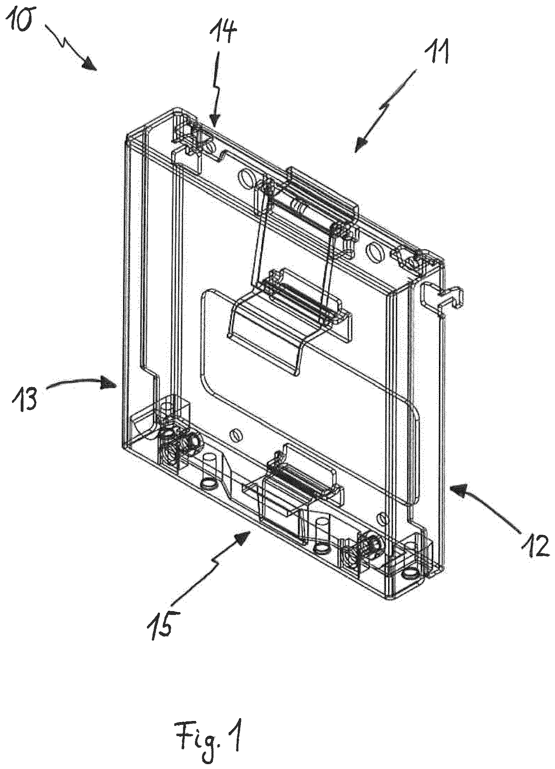

Fig. 1 zeigt eine perspektivische, transparente Seitenansicht einer erfindungsgemäßen Anbaueinrichtung 10 mit einer Befestigungsvorrichtung 11. Die Anbaueinrichtung 10 ist bei diesem Ausführungsbeispiel mehrteilig ausgebildet und ist aus einem Befestigungsmodul 12 und einem Funktionsmodul 13 zusammengesetzt. Das Befestigungsmodul 12 und das Funktionsmodul 13 sind mit einer Steckverbindung 14 und einer Rastverbindung 15 miteinander lösbar verbunden. Gemäß diesem Ausführungsbeispiel ist die Steckverbindung 14 in einem Bereich einer Oberseite der Anbaueinrichtung 10 und die Rastverbindung in einem Bereich einer Unterseite der Anbaueinrichtung 10 angeordnet. Aufgrund des Befestigungsmoduls 12 und des Funktionsmoduls 13 ist die Anbaueinrichtung 10 modular aufgebaut, wobei das Funktionsmodul 13 in Bezug zu dem Befestigungsmodul 12 austauschbar ist.

Das Befestigungsmodul 12 weist die Befestigungsvorrichtung 11 zum Befestigen der Anbaueinrichtung 10 an einer hier nicht näher dargestellten Nut auf. In der hier dargestellten Position befindet sich die Befestigungsvorrichtung 11 in einer Halteposition zum Halten der Anbaueinrichtung 10 bzw. des Befestigungsmoduls 12 in einer Nut.

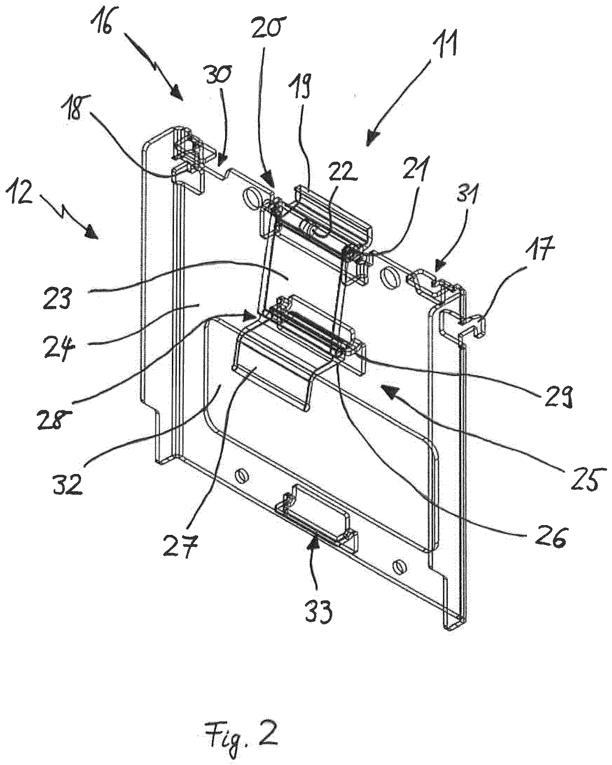

Fig. 2 zeigt eine perspektivische, transparente Seitenansicht des Befestigungsmoduls 12 mit der Befestigungsvorrichtung 11 gemäß Figur 1. Die Befestigungsvorrichtung 11 weist eine Eingreifeinrichtung 16 auf. Die Eingreifeinrichtung 16 hat bei diesem Ausführungsbeispiel ein erstes Eingreifelement 17 und ein weiteres erstes Eingreifelement 18. Hier sind die ersten Eingreifelement 17, 18 starr und als L-förmige Winkelelemente bzw. als Einhaknasen ausgebildet. Die ersten Eingreifelemente 17, 18 sind an zwei voneinander abgewandten Seiten des Befestigungsmoduls 12 angeordnet. Des Weiteren sind die ersten Eingreifelemente 17, 18 benachbart zu einem oberen Ende des Befestigungsmoduls 12 positioniert. Darüber hinaus hat die Eingreifeinrichtung 16 ein zweites Eingreifelement 19. Das zweite Eingreifelement 19 ist bei diesem Ausführungsbeispiel als ein im Querschnitt L-förmiges Winkel- bzw. Stegelement ausgebildet. Das zweite Eingreifelement 19 ist hier beispielhaft mittig an dem Befestigungsmodul 12 und zwischen den ersten Eingreifelementen 17, 18 angeordnet.

Das zweite Eingreifelement 19 ist bewegbar ausgebildet. Für die Bewegbarkeit des zweiten Eingreifelementes 10 ist ein Schwenklager 20 vorgesehen. Das Schwenklager 20 des zweiten Eingreifelementes 19 ist um eine Schwenkachse 21 drehbar gelagert. Das zweite Eingreifelement 19 weist ein Stoppelement 22 auf. Bei diesem Ausführungsbeispiel ist das Stoppelement 22 im Bereich der Schwenkachse 21 angeordnet. Das Stoppelement 22 ist derart ausgebildet und/oder angeordnet, dass die Bewegung des zweiten Eingreifelementes 19 zum Lösen der Anbaueinrichtung 10 begrenzt ist.

Dem zweiten Eingreifelement 19 ist ein Schwenkhebel 23 zugeordnet. Der Schwenkhebel 23 ist mit dem Schwenklager 20 des zweiten Eingreifelementes 19 verbunden. Ausgehend von dem Schwenklager 20 erstreckt sich der Schwenkhebel 23 in eine Richtung weg von dem zweiten Eingreifelement 19. Das Befestigungsmodul 12 weist eine Basisfläche 24 auf. Der Schwenkhebel 23 ist bei diesem Ausführungsbeispiel, insbesondere in der dargestellten Halteposition, in einem spitzen Winkel zu der Basisfläche 24 ausgerichtet. Alternativ kann sich der Schwenkhebel 23, insbesondere in der Halteposition, im Wesentlichen parallel zur Basisfläche 24 erstrecken.

An einem von dem Schwenklager 20 und/oder dem zweiten Eingreifelement 19 abgewandten Ende des Schwenkhebels 23 weist dieser eine Fixiereinrichtung 25 auf. Mittels der Fixiereinrichtung 25 ist der Schwenkhebel 23 lösbar an der Basisfläche 24 des Befestigungsmoduls 12 fixierbar. Bei diesem Ausführungsbeispiel weist die Fixiereinrichtung 25 ein erstes Rastelement 26 auf. Darüber hinaus hat die Fixiereinrichtung 25 ein Betätigungselement 27. Das erste Rastelement 26 und das Betätigungselement 27 sind mittels einer elastischen Schwenkverbindung 28 mit dem Schwenkhebel 23 verbunden. Bei diesem Ausführungsbeispiel sind der Schwenkhebel 23, die elastische Verbindung 28, das Betätigungselement 27 und das erste Rastelement 26 als ein einstückiges Kunststoffteil ausgebildet. Ausgehend von der elastischen Verbindung 28 erstrecken sich das erste Rastelement 26 und das Betätigungselement 27 in zwei von einander abgewandte Richtungen. Des Weiteren weist die Fixiereinrichtung 25 ein zweites Rastelement 29 auf. Das zweite Rastelement 29 ist an der Basisfläche 24 des Befestigungsmoduls 12 befestigt. Das erste Rastelement 26 und das zweite Rastelement 29 sind einander zugewandt ausgerichtet. In der hier dargestellten Halteposition greifen das erste Rastelement 26 und das zweite Rastelement 29 ineinander ein. Das Betätigungselement 27 ist bei diesem Ausführungsbeispiel stegartig und mit einem L-förmigen Querschnitt ausgebildet.

Das Befestigungsmodul 12 weist ein Steckelement 30 und ein weiteres Steckelement 31 auf. Bei diesem Ausführungsbeispiel sind die Steckelemente 30, 31 als Ausnehmungen zum Aufnehmen korrespondierend ausgebildeter Steckelemente des Funktionsmoduls 13 ausgebildet. Hier sind die Ausnehmungen bzw. Steckelemente 30, 31 in eine Kante der Basisfläche 24 eingebracht, die zu der Eingreifeinrichtung 16 benachbart ist.

Die Basisfläche 24 weist gemäß diesem Ausführungsbeispiel eine Zugangsöffnung 32 auf. Durch die Zugangsöffnung 32 können beispielsweise Kabel zu dem Funktionsmodul 13 geführt werden. Alternativ oder zusätzlich kann die Zugangsöffnung 32 als eine Kabelführung dienen.

An einer von der Befestigungsvorrichtung 11 abgewandten Seite weist das Befestigungsmodul 12 ein Rastmittel 33 auf. Das Rastmittel 33 ist auf derselben Seite der Basisfläche 24 befestigt wie das Rastelement 29. Das Rastmittel 33 ist korrespondieren zu einem weiteren Rastmittel des Funktionsmoduls 13 ausgebildet.

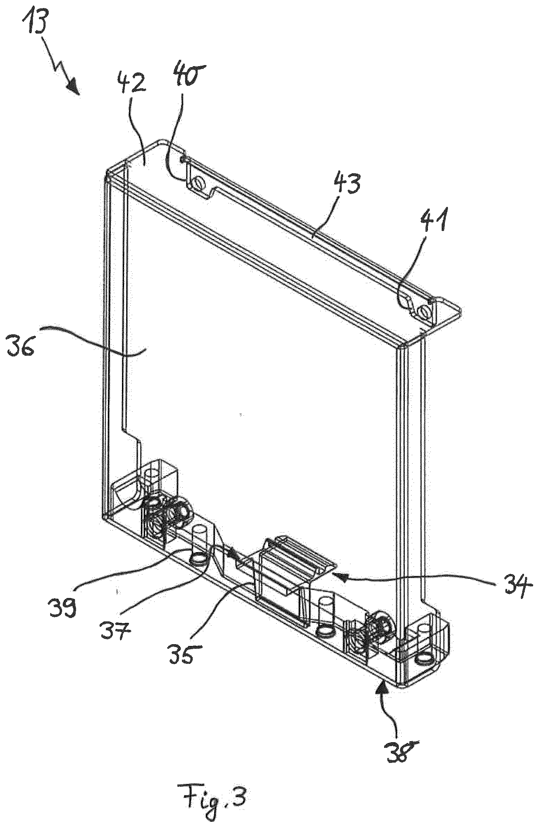

Fig. 3 zeigt eine perspektivische, transparente Seitenansicht des Funktionsmoduls 13 zum Befestigen an dem Befestigungsmodul 12 gemäß Figuren 1 und 2. Das Funktionsmodul 13 weist ein Rastmittel 34 auf. Das Rastmittel 34 ist zum Zusammenwirken mit dem Rastmittel 33 des Befestigungsmoduls 12 gemäß Fig. 2 ausgebildet. Das Rastmittel 34 hat ein Betätigungsmittel 35. Das Rastmittel 34 mit dem Betätigungsmittel 35 weist einen im Wesentlichen T-förmigen Querschnitt auf. Das Betätigungsmittel 35 ist stegartig ausgebildet.

Das Funktionsmodul 13 weist eine Multifunktionsseite 36 auf. Bei diesem Ausführungsbeispiel ist die Multifunktionsseite 36 als eine schlichte Frontseite ausgebildet. Alternativ und in Abhängigkeit von der gewünschten Funktionalität kann die Multifunktionsseite 36 eine hiervon abweichende Ausbildung aufweisen. Das Rastmittel 34 ist an einer Innenseite der Multifunktionsseite 36 befestigt. Das Rastmittel 34 ist mittels des Betätigungsmittels 35 in Bezug zu der Innenseite der Multifunktionsseite 36 elastisch bewegbar gelagert. Das Betätigungsmittel 35 erstreckt sich im Wesentlichen parallel zu der Fläche der Multifunktionsseite 36. Das Rastmittel 34 erstreckt sich quer, insbesondere rechtwinkelig, zu der Fläche der Multifunktionsseite 36. Aufgrund einer Zug- oder Druckkraft auf die Fläche des Betätigungsmittels 35 ist das Rastmittel 34 um einen Rotationsabschnitt 37 im Bereich der Verbindung des Rastmittels 34 mit der Innenseite der Multifunktionsseite 36 verschwenkbar. Das Rastmittel 34 und das Betätigungsmittel 35 sind im Bereich einer weiteren Multifunktionsseite 38 des Funktionsmoduls 13 angeordnet. Die weitere Multifunktionsseite 38 ist bei diesem Ausführungsbeispiel als eine Unterseite ausgebildet und weist mehrere Befestigungselemente 39 auf. Für eine bessere Übersichtlichkeit sind nicht alle Befestigungselemente 39 mit einem Bezugszeichen versehen. Hier sind beispielhaft insgesamt vier Befestigungselemente 39 vorgesehen. Die Befestigungselemente 39 dienen zum Befestigen eines hier nicht näher dargestellten Anbauelementes und/oder Halters an dem Funktionsmodul 13. Hier sind die Befestigungselemente 39 beispielhaft als Gewindeaufnahmen ausgebildet. Somit lassen sich zusätzliche Anbauelemente und/oder Halter beispielsweise mittels Schrauben an der Unterseite bzw. der weiteren Multifunktionsseite 38 befestigen.

Das Funktionsmodul 13 weist Steckelemente 40, 41 auf. Die Steckelemente 40, 41 sind bei diesem Ausführungsbeispiel als Vorsprünge ausgebildet. Die Steckelemente 40, 41 erstrecken sich im Wesentlichen parallel zur Fläche der Multifunktionsseite 36. Des Weiteren erstrecken sich die Steckelemente 40, 41 ausgehend von einer Oberseite 42 des Funktionsmoduls 13 in Richtung der Unterseite bzw. weiteren Multifunktionsseite 38. Die Steckelemente 40, 41 sind korrespondierend zu den Steckelementen 30, 31 des Befestigungsmoduls 12 gemäß Fig. 2 ausgebildet. Zwischen den Steckelementen 40, 41 erstreckt sich eine Rippe 43.

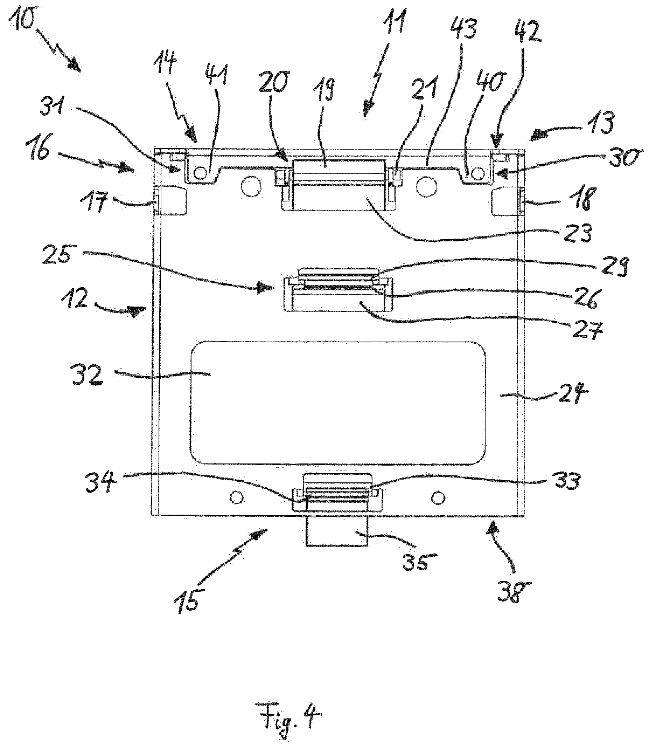

Fig. 4 zeigt eine Rückansicht der erfindungsgemäßen Anbaueinrichtung 10 gemäß Fig. 1 mit der Befestigungsvorrichtung 11. Gut zu erkennen ist, dass die ersten Steckelemente 40, 41 zum Herstellen der Steckverbindung 14 formschlüssig in die zweiten Steckelemente 30, 31 des Befestigungsmoduls 12 eingreifen.

Des Weiteren erstreckt sich das Betätigungsmittel 35 über die Unterseite bzw. die Multifunktionsseite 38 hinaus. Somit steht das Betätigungsmittel 35 ein Stück weit aus der Unterseite bzw. der Multifunktionsseite 38 hervor. Hierdurch ist das Betätigungsmittel 35 zum manuellen Lösen der Rastverbindung 15 leicht erreichbar und bequem betätigbar.

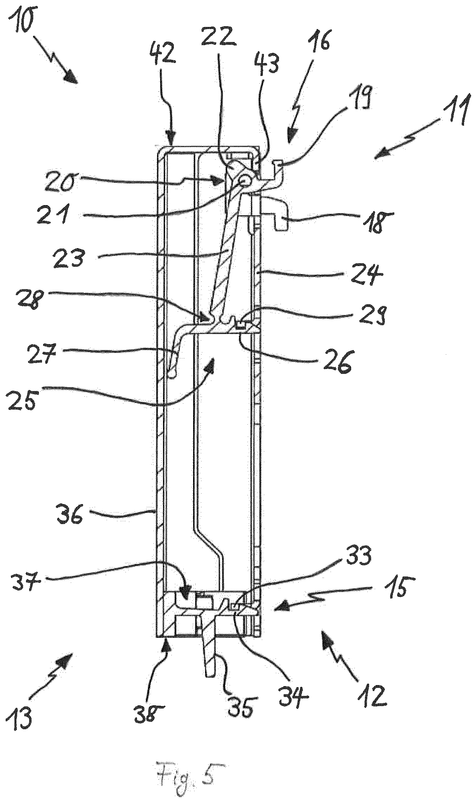

Fig. 5 zeigt eine geschnittene Seitenansicht der erfindungsgemäßen Anbaueinrichtung 10 gemäß Fig. 1 mit der Befestigungsvorrichtung 11. Hier dargestellt ist die Halteposition. In dieser Halteposition sind die freien Enden der ersten Eingreifelemente 17, 18 und des zweiten Eingreifelementes 19 von einander abgewandt und sind im Wesentlichen parallel zueinander ausgerichtet. Es ist erkennbar, dass in der Halteposition und bei einer hergestellten Verbindung des Funktionsmoduls 13 mit dem Befestigungsmodul 12 die Halteposition des zweiten Eingreifelementes 19 mittels des Funktionsmoduls 13 zusätzlich gesichert ist. Hierzu liegt das Betätigungselement 27 der Fixiereinrichtung 25 an der Innenseite der Multifunktionsseite 36 an. Hierdurch ist ein Verschwenken des Schwenkhebels 23 und damit ein Verschwenken des zweiten Eingreifelementes 19 um das Schwenklager 20 bzw. die Schwenkachse 21 aus der Halteposition heraus in Richtung einer Ein- und Ausführposition blockiert. Erst bei einem von dem Befestigungsmodul 12 gelösten und von diesem entfernten Funktionsmodul 13 ist ein Lösen des ersten Rastelementes 26 von dem zweiten Rastelement 29 mittels des Betätigungselementes 27 und einem Verschwenken des Betätigungselementes 27 und des ersten Rastelementes 26 um die elastische Verbindung 28 ermöglicht. Nach dem erfolgten Lösen des ersten Rastelementes 26 von dem zweiten Rastelement 29 kann der Schwenkhebel 23 mittels des Betätigungselementes 27 aus der Halteposition heraus in Richtung einer Ein- und Ausführposition verschwenkt werden. Hierbei ist die hier nicht näher dargestellte Ein- und Ausführposition erreicht, sobald das Stoppelement 22 an die Rippe 43 anschlägt. In der Ein- und Ausführposition ist das zweite Eingreifelement 19 in Richtung des ersten Eingreifelementes 17 bzw. 18 verschwenkt. Somit ist der Abstand zwischen den freien Enden des ersten Eingreifelementes 17 bzw. 18 und dem zweiten Eingreifelement 19 in Bezug zu einer Breite des Spaltes 48 der Nut 44 reduziert. Hierdurch ist die räumliche Ausdehnung der Eingreifeinrichtung 16 reduzierbar, wodurch die Anbaueinrichtung 10 an einer beliebigen Stelle in eine hier nicht näher dargestellte Nut einführbar oder ausführbar ist.

Zum Wechsel von der Ein- und Ausführposition in die Halteposition wird der Schwenkhebel 23 mittels des Betätigungselementes 27 in Richtung der Basisfläche 24 verschwenkt. Bei einem Wechsel von der Halteposition in die Ein- und Ausführposition wird der Schwenkhebel 23 mittels des Betätigungselementes 27 von der Basisfläche 24 weg verschwenkt.

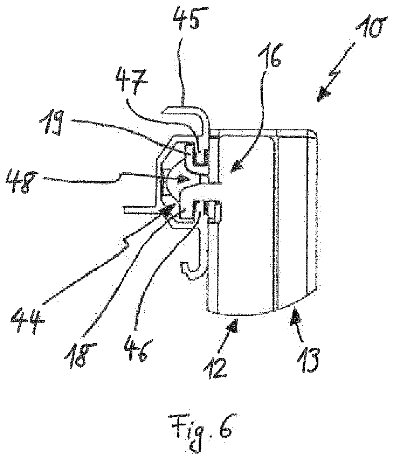

Fig. 6 zeigt einen Ausschnitt einer Seitenansicht der erfindungsgemäßen Anbaueinrichtung 10 gemäß Fig. 1 mit der Befestigungsvorrichtung 11 an einer Nut 44. Bei diesem Ausführungsbeispiel ist die Nut 44 Bestandteil eines Profils 45. Hier ist das Profil 45 beispielhaft als eine Tragschiene 45 ausgebildet. In der hier dargestellten Halteposition hintergreift das erste Eingreifelement 17 bzw. 18 einen ersten Steg 46 und das zweite Eingreifelement 19 hintergreift einen zweiten Steg 47. Die Stege 46, 47 sind einander zugewandt und von einander beabstandet. Somit ist zwischen den Stegen 46, 47 ein Spalt 48 gebildet. Durch den Spalt 48 greift die Eingreifeinrichtung 16 in die Nut 44 ein. Hierbei ist die Nut 44 als eine sogenannte Innennut ausgebildet. In der Halteposition des zweiten Eingreifelementes 19 ist die Anbaueinrichtung 10 zuverlässig an der Nut 44 bzw. der Tragschiene 45 gehalten. Abhängig von den konkreten Ausmaßen und/oder der Gestalt der ersten Eingreifelemente 17,18 und/oder des zweiten Eingreifelementes 19 ist die Anbaueinrichtung 10 in der Halteposition ortsfest an der Nut 44 bzw. der Tragschiene 45 gehalten oder ist die Anbaueinrichtung 10 in Längsrichtung der Nut 44 verschiebbar.

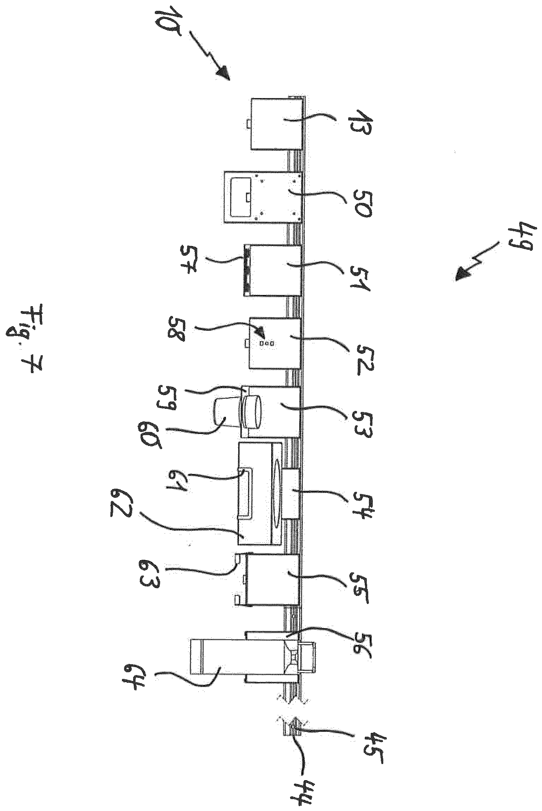

Fig. 7 zeigt eine Frontansicht eines Befestigungssystems 49 mit mehreren erfindungsgemäßen Anbaueinrichtungen 10, die jeweils die Befestigungsvorrichtung 11 aufweisen. Für eine bessere Übersichtlichkeit weisen nicht sämtliche Anbaueinrichtungen 10 ein Bezugszeichen auf. Das Befestigungssystem 49 weist ein Profil bzw. eine Tragschiene 45 gemäß Fig. 6 auf. An bzw. in der Nut 44 der Tragschiene 45 sind bei diesem Ausführungsbeispiel insgesamt acht Anbaueinrichtungen 10 mittels der Befestigungsvorrichtung 11 befestigt. Hierbei weisen die Anbaueinrichtungen 10 jeweils ein Funktionsmodul 13, 50, 51, 52, 53, 54, 55, 56 auf. Hierbei stimmen die Funktionsmodule 50...56 weitgehend, insbesondere bezüglich der Verbindung mit dem Befestigungsmodul 12, mit dem Funktionsmodul 13 überein. Jedoch unterscheidet sich jeweils die Gestaltung der Multifunktionsseite 36 und/oder 38.

So ist die Multifunktionsseite 36 des Funktionsmoduls 50 als ein Monitorhalter ausgebildet. Bei dem Funktionsmodul 51 ist an der Unterseite bzw. der weiteren Multifunktionsseite 38 ein Pipettenhalter 57 montiert. Die Multifunktionsseite 36 des Funktionsmoduls 52 weist einen Adapter 58 auf. Bei diesem Ausführungsbeispiel ist der Adapter 58 als ein VESA-Adapter ausgebildet. Das Funktionsmodul 53 weist an seiner Unterseite bzw. Multifunktionsseite 38 eine Becherhalter 59 auf. In dem Becherhalter 59 befindet sich ein Becher 60. An der Unterseite bzw. der Multifunktionsseite 38 des Funktionsmoduls 54 ist ein Boxenhalter 61 zum Halten einer Box 62 montiert. Das Funktionsmodul 55 weist an seiner Unterseite bzw. Multifunktionsseite 38 einen Entsorgungsbeutelhalter 63 auf. An der Multifunktionsseite 36 des Funktionsmoduls 56 ist ein Seifenspenderhalter 64 montiert.

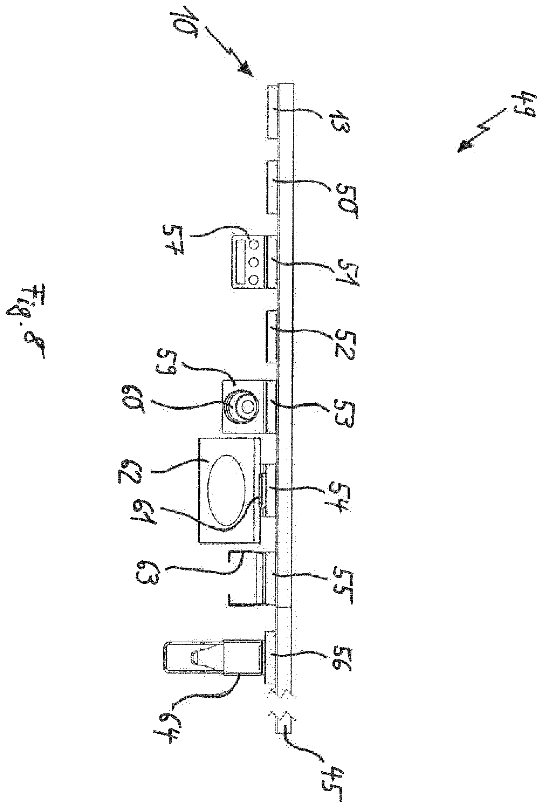

Fig. 8 zeigt eine Draufsicht auf das Befestigungssystem gemäß Fig. 7. Alternativ zu den hier dargestellten Ausführungen der Funktionsmodule 13, 50...56 sind abhängig von der gewünschten Funktionalität und zum Ausrüsten eines Arbeitsplatzes weitere Gestaltungen der Multifunktionsseite 36 und/oder 38 denkbar.

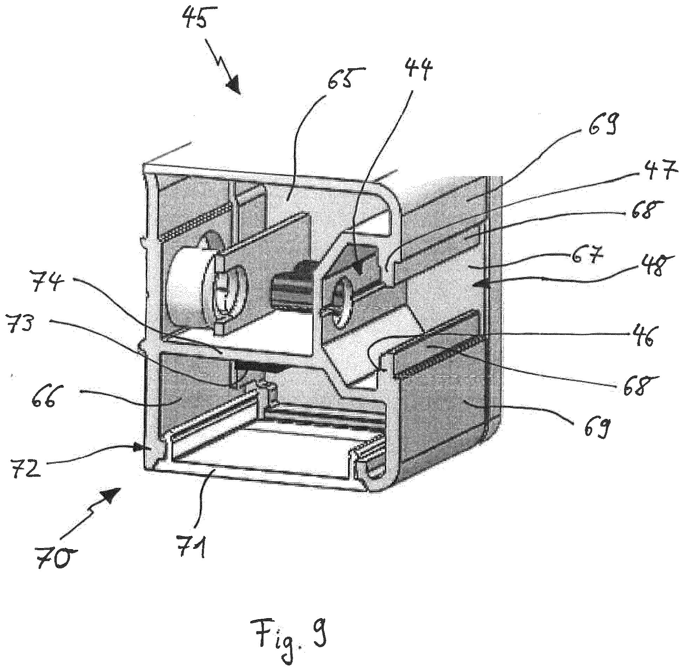

Fig. 9 zeigt eine geschnittene, perspektivische Seitenansicht eines Profils bzw. einer Tragschiene 45 für ein Befestigungssystem 49 gemäß Figuren 7 und 8. Bei diesem Ausführungsbeispiel weist die Tragschiene 45 im Querschnitt drei Kammern 65, 66, 67 auf. Hierbei ist die Kammer 67 durch die Nut 44 gebildet. Die Stege 46, 47 weisen jeweils eine nach außen weisende und von der Nut 44 abgewandte Anlagefläche 68 auf. Die Anlagefläche 68 ist in Bezug zu einer unmittelbar benachbarten Oberfläche 69 der Tragschiene 45 zurückversetzt. Somit ist die Anlagefläche 68 des Stegs 46 bzw. 47 stufenartig nach innen gerückt. Die Anlagenflächen 68 ermöglichen das Einsetzen eines hier nicht näher dargestellten Verschlusselementes zum Verschließen der Nut 44. Hierzu ist das Verschlusselement mindestens teilweise in den Spalt 48 einführbar. Des Weiteren liegt das Verschlusselement an der Anlagefläche 68 der Stege 46, 47 an. Hierbei ist das Verschlusselement derart ausgebildet, dass eine Oberfläche des Verschlusselementes bei einer Anlage an die Anlageflächen 68 bündig mit der Oberfläche 69 mit der Tragschiene 45 abschließt.

Des Weiteren weist die Tragschiene 45 eine Beleuchtungseinrichtung 70 auf. Bei diesem Ausführungsbeispiel ist die Beleuchtungseinrichtung 70 der Kammer 66 zugeordnet. Die Beleuchtungseinrichtung 70 weist eine lichttransparente Abdeckung 71 auf. Mittels der lichttransparenten Abdeckung 71 ist die Kammer 66 nach außen bzw. in Bezug zur Umgebung abgeschlossen. Die Abdeckung 71 ist mittels einer Rastverbindung und/oder Schiebeverbindung 72 mit der Tragschiene 45 verbunden. Bei diesem Ausführungsbeispiel erstreckt sich die lichttransparente Abdeckung 71 quer oder rechtwinkelig zu einer Seite der Tragschiene 45 mit der Nut 44.

Eine Lichtquelle 73 ist innerhalb der Tragschiene 45 angeordnet. Bei diesem Ausführungsbeispiel ist die Lichtquelle 73 innerhalb der Kammer 66 positioniert. Hier ist die Lichtquelle 73 an einer Wand 74 der Tragschiene 45 befestigt, wobei die Wand 74 einer Innenseite der lichttransparenten Abdeckung 71 zugewandt ist. Bei diesem Beispiel verläuft ein Abschnitt der Wand 74 mit der Lichtquelle 73 parallel zu einer Ebene der lichttransparenten Abdeckung 71. Die Lichtquelle 73 ist an einer Seite der Wand 74 befestigt, so dass die Lichtquelle 73 der lichttransparenten Abdeckung 71 zugewandt ist.

Bei diesem Ausführungsbeispiel ist die Lichtquelle 73 als ein LED-Band ausgebildet. Bei einer Befestigung der Tragschiene 45 an einer Tragstruktur, beispielsweise einer Wand und/oder einem Funktionskanal kann mittels der Beleuchtungseinrichtung 70 ein hier nicht näher dargestellter Arbeitsplatz beleuchtet werden. Somit ist mit der Tragschiene 45 eine Doppelfunktion realisierbar, indem die Tragschiene 45 sowohl eine Nut 44 zum Befestigen mindestens einer Anbaueinrichtung 10 als auch eine Beleuchtungseinrichtung 70 bereitstellt.

### Bezugszeichenliste:

| | | | |
|---|---|---|---|
| 10 | Anbaueinrichtung | 49 | Befestigungssystem |
| 11 | Befestigungsvorrichtung | 50 | Funktionsmodul |
| 12 | Befestigungsmodul | 51 | Funktionsmodul |
| 13 | Funktionsmodul | 52 | Funktionsmodul |
| 14 | Steckverbindung | 53 | Funktionsmodul |
| 15 | Rastverbindung | 54 | Funktionsmodul |
| 16 | Eingreifeinrichtung | 55 | Funktionsmodul |
| 17 | Erstes Eingreifelement | 56 | Funktionsmodul |
| 18 | Erstes Eingreifelement | 57 | Pipettenhalter |
| 19 | Zweites Eingreifelement | 58 | Adapter |
| 20 | Schwenklager | 59 | Becherhalter |
| 21 | Schwenkachse | 60 | Becher |
| 22 | Stoppelement | 61 | Boxenhalter |
| 23 | Schwenkhebel | 62 | Box |
| 24 | Basisfläche | 63 | Entsorgungsbeutelhalter |
| 25 | Fixiereinrichtung | 64 | Seifenspenderhalter |
| 26 | Erstes Rastelement | 65 | Kammer |
| 27 | Betätigungselement | 66 | Kammer |
| 28 | Elastische Verbindung | 67 | Kammer |
| 29 | Zweites Rastelement | 68 | Anlagefläche |
| 30 | (Zweites) Steckelement | 69 | Oberfläche |
| 31 | Weiteres (zweites) Steckelement | 70 | Beleuchtungseinrichtung |
| 32 | Zugangsöffnung | 71 | Lichttransparente Abdeckung |
| 33 | (Zweites) Rastmittel | 72 | Verbindung |
| 34 | (Erstes) Rastmittel | 73 | Lichtquelle |
| 35 | Betätigungsmittel | 74 | Wand |
| 36 | Multifunktionsseite | | |
| 37 | Rotationsabschnitt | | |
| 38 | Weitere Multifunktionsseite | | |
| 39 | Befestigungselement | | |
| 40 | (Erstes) Steckelement | | |
| 41 | Weiteres (erstes) Steckelement | | |
| 42 | Oberseite | | |
| 43 | Rippe | | |
| 44 | Nut | | |
| 45 | Profil (Tragschiene) | | |
| 46 | Steg | | |
| 47 | Steg | | |
| 48 | Spalt | | |

## Patentansprüche

1. Anbaueinrichtung zum Befestigen an einer Nut (44), mit einer Befestigungsvorrichtung (11) mit mindestens einer Eingreifeinrichtung (16) zum Eingreifen in die Nut (44), wobei die Eingreifeinrichtung (16) mindestens ein erstes Eingreifelement (17, 18) und mindestens ein bewegbares zweites Eingreifelement (19) hat, und zum Verschwenken des zweiten Eingreifelementes (19) ein Schwenklager (20) vorgesehen ist, wobei dem zweiten Eingreifelement (19) ein Schwenkhebel (23) zugeordnet ist, der ein Betätigungselement (27) aufweist, wobei die Anbaueinrichtung (10) modular ausgebildet ist und ein Funktionsmodul (13) und ein Befestigungsmodul (12) aufweist, das das erste Eingreifelement (17, 18) und das zweite Eingreifelement (19) hat, wobei das Befestigungsmodul (12) und das Funktionsmodul (13) mittels einer Rastverbindung (15) und/oder einer Steckverbindung (14) lösbar miteinander verbindbar sind, **dadurch gekennzeichnet, dass** das zweite Eingreifelement (19) bei einer Verbindung des Funktionsmoduls (13) mit dem Befestigungsmodul (12) in einer Halteposition zum Halten der Anbaueinrichtung (10) an der Nut (44) gesichert ist.

2. Anbaueinrichtung nach Anspruch 1, **dadurch gekennzeichnet, dass** das erste Eingreifelement (17, 18) zum Hintergreifen eines ersten Steges (46) und/oder das zweite Eingreifelement (19) zum Hintergreifen eines zweiten Steges (47) ausgebildet ist, insbesondere ist das erste Eingreifelement (17, 18) und/oder das zweite Eingreifelement (19) als ein Winkelelement und/oder L-förmig ausgebildet, vorzugsweise sind freie Enden des ersten Eingreifelementes (17, 18) und des zweiten Eingreifelementes (19), insbesondere in einer Halteposition zum Halten der Anbaueinrichtung (10) an der Nut (44), voneinander abgewandt.

3. Anbaueinrichtung nach Anspruch 1 oder 2, **dadurch gekennzeichnet, dass** ein Profil (45), vorzugsweise eine Tragschiene und/oder ein Funktionskanal, die Nut (44), einen ersten Steg (46) und/oder einen zweiten Steg (47) aufweist, insbesondere sind der erste Steg (46) und der zweite Steg (47) einander zugewandt und/oder zum Bilden der Nut (44) voneinander beabstandet, vorzugsweise ist das zweite Eingreifelement (19) aufgrund einer Verschwenkung, Verdrehung und/oder Verschiebung bewegbar.

4. Anbaueinrichtung nach einem der vorhergehenden Ansprüche, **dadurch gekennzeichnet, dass** das Schwenklager (20) des zweiten Eingreifelementes (19) an einer Schwenkachse (21) drehbar gelagert, vorzugsweise ist die Schwenkachse (21) parallel zur Nut (44) und/oder einem Steg (46, 47), insbesondere zu Längsausrichtung eines Profils (45) und/oder einer Tragschiene, ausgerichtet.

5. Anbaueinrichtung nach einem der vorhergehenden Ansprüche, **dadurch gekennzeichnet, dass** sich der Schwenkhebel (23) ausgehend von einem Schwenklager (20) weg erstreckt und/oder der Schwenkhebel (23) ausgehend von einem Schwenklager (20) zum Bereitstellen eines Hebelmechanismus länger als das zweite Eingreifelement (19) ist, vorzugsweise ist ein von dem zweiten Eingreifelement (19) und/oder dem Schwenklager (20) abgewandtes Ende des Schwenkhebels (23) zum lösbaren Fixieren des Schwenkhebels (23) in einer Halteposition an der Anbaueinrichtung (10) ausgebildet.

6. Anbaueinrichtung nach einem der vorhergehenden Ansprüche, **dadurch gekennzeichnet, dass** dem zweiten Eingreifelement (19) eine Fixiereinrichtung (25) zum lösbaren Fixieren des zweiten Eingreifelementes (19) und/oder eines Schwenkhebels (23) in einer Halteposition zum Halten der Anbaueinrichtung (10) an der Nut (44) zugeordnet ist, insbesondere ist die Fixiereinrichtung (25) zum Herstellen einer lösbaren Verbindung mit der Anbaueinrichtung (10) ausgebildet, vorzugsweise ist die Fixiereinrichtung (25) an einem von dem zweiten Eingreifelement (19) und/oder von einem Schwenklager (20) abgewandten Ende des Schwenkhebels (23) angeordnet, vorzugsweise weist die Fixiereinrichtung (25) zum Herstellen einer lösbaren Rastverbindung ein erstes Rastelement (26) zum Zusammenwirken mit einem zum ersten Rastelement (26) korrespondierend ausgebildeten zweiten Rastelement (29) der Anbaueinrichtung (10) auf.

7. Anbaueinrichtung nach Anspruch 6, **dadurch gekennzeichnet, dass** die Fixiereinrichtung (25) mittels einer Schwenkverbindung und/oder einer elastischen Verbindung (28) mit dem Schwenkhebel (23), vorzugsweise einstückig, verbunden ist, insbesondere weist die Fixiereinrichtung (25) ein Betätigungselement (27) zum, insbesondere einhändigen, manuellen Lösen und/oder Herstellen einer Verbindung mit der Anbaueinrichtung (10) und/oder zum Bewegen des zweiten Eingreifelementes (19) auf, vorzugsweise erstrecken sich das Betätigungselement (27) und das erste Rastelement (26) der Fixiereinrichtung (25) ausgehend von der Schwenkverbindung und/oder der elastischen Verbindung (28) in zwei voneinander abgewandte Richtungen.

8. Anbaueinrichtung nach einem der vorhergehenden Ansprüche, **dadurch gekennzeichnet, dass** die Anbaueinrichtung (10) mindestens zweistückig ausgebildet ist.

9. Anbaueinrichtung nach Anspruch 6, **dadurch gekennzeichnet, dass** die Fixiereinrichtung (25) zum Fixieren des zweiten Eingreifelementes (19) in der Halteposition mittels des Funktionsmoduls (13) gegen eine Betätigung zum Lösen und/oder Verschwenken des zweiten Eingreifelementes (19) blockiert ist, vorzugsweise liegt ein Teil des Funktionsmoduls (13) an der Fixiereinrichtung (25) und/oder einem Betätigungselement (27) der Fixiereinrichtung (25) an.

10. Anbaueinrichtung nach einem der vorhergehenden Ansprüche, **dadurch gekennzeichnet, dass** das Funktionsmodul (13) austauschbar ist.

11. Anbaueinrichtung nach einem der vorhergehenden Ansprüche, **dadurch gekennzeichnet, dass** das Funktionsmodul (13) mindestens ein erstes Steckelement (40, 41) und das Befestigungsmodul (12) mindestens ein zu dem ersten Steckelement (40, 41) korrespondierend ausgebildetes zweites Steckelement (30, 31) hat, insbesondere weist das Funktionsmodul (13) mindestens ein erstes Rastmittel (34) und das Befestigungsmodul (12) ein zu dem ersten Rastmittel (34) korrespondierend ausgebildetes zweites Rastmittel (33) auf, vorzugsweise ist das erste Rastmittel (34) und/oder das zweite Rastmittel (33) zum Lösen der Rastverbindung (15) elastisch gelagert, insbesondere weist das elastisch gelagerte erste Rastmittel (34) und/oder zweite Rastmittel (33) ein Betätigungsmittel (35) zum manuellen Lösen der Rastverbindung (15) auf.

12. Anbaueinrichtung nach einem der vorhergehenden Ansprüche, **gekennzeichnet durch** mindestens eine Multifunktionsseite (36, 38), insbesondere hat ein Funktionsmodul (13) eine von einem Befestigungsmodul (12) abgewandte Multifunktionsseite (36, 38), insbesondere weist die Multifunktionsseite (36, 38) eine Montageplatte, ein Anbauelement, einen Halter, einen Adapter (58), eine Kabelführung, mindestens einen Medienanschluss, einen Monitor, eine Magnettafel, einen Instrumentenhalter, einen Werkzeughalter, einen Pipettenhalter (57), einen Getränkehalter (59), einen Boxenhalter (61, einen Entsorgungsbeutelhalter (63) und/oder einen Seifenspenderhalter (64) auf.

13. Befestigungssystem mit einer Anbaueinrichtung (10) nach einem der Ansprüche 1 bis 12, mit einer Nut (44) zum Befestigen mindestens einer Anbaueinrichtung (10), insbesondere ist die Anbaueinrichtung (10) in einer Halteposition des zweiten Eingreifelementes (19) ortsfest oder in Längsrichtung der Nut (44) verschiebbar gehalten.

14. Befestigungssystem nach Anspruch 13, **dadurch gekennzeichnet, dass** die Nut (44) in einem Profil (45), vorzugsweise in eine Tragschiene und/oder in einer Wand eines Funktionskanals, integriert ist, insbesondere weist das Profil (45) eine Beleuchtungseinrichtung (70) auf, vorzugsweise hat das Profil (45), insbesondere an einer Seite, eine lichttransparente Abdeckung (71) und/oder eine Lichtquelle (73) ist innerhalb des Profils (45) angeordnet, insbesondere ist die Lichtquelle (73) in einer Kammer (66) des Profils (45) angeordnet und/oder die Lichtquelle (73) ist als ein LED-Band ausgebildet.

15. Verwendung einer Anbaueinrichtung (10) nach einem der Ansprüche 1 bis 12 und/oder eines Befestigungssystems (49) nach einem der Ansprüche 13 oder 14 in einem Labor, einem Unterrichtsraum und/oder einem Sanitärraum, insbesondere in einer Forschungseinrichtung, einer Universität und/oder einer Schule, vorzugsweise zum Ausrüsten mindestens eines Arbeitsplatzes.

## Claims

1. Attachment for fastening to a groove (44), comprising a fastening device (11) with at least one engaging means (16) for engaging in the groove (44), wherein the engaging means (16) has at least one first engaging member (17,18) and at least one movable second engaging member (19) and a pivot bearing (20) is provided for pivoting the second engaging member (19), wherein associated with the second engaging member (19) is a pivot lever (23) which has an actuating element (27), wherein the attachment (10) has a modular design and a functional module (13) and a fastening module (12) that comprises the first engaging member (17, 18) and the second engaging member (19), wherein the fastening module (12) and the functional module (13) can be detachably connected to each other by means of a latching connection (15) and/or a plug-in connection (14), **characterized in that** the second engaging member (19) is secured in a holding position for holding the attachment (10) in the groove (44) when the functional module (13) is connected to the fastening module (12).

2. Attachment according to Claim 1, **characterized in that** the first engaging member (17, 18) is designed to engage behind a first flange (46) and/or the second engaging member (19) is designed to engage behind a second flange (47), in particular the first engaging member (17,18) and/or the second engaging member (19) are embodied as an angled element and/or L-shaped, preferably free ends of the first engaging member (17,18) and of the second engaging member (19) face away from one another, in particular in a holding position for holding the attachment (10) on the groove (44).

3. Attachment according to Claims 1 or 2, **characterized in that** a profile (45) preferably comprises a support rail and/or a functional channel, the groove (44), a first flange (46) and/or a second flange (47), in particular, the first flange (46) and the second flange (47) face each other and/or are spaced apart from each other to form the groove (44), preferably the second engaging member (19) is movable due to pivoting, rotation and/or displacement.

4. Attachment according to any one of the preceding claims, **characterized in that** the pivot bearing (20) of the second engaging member (19) is rotatably mounted on a pivot axis (21), the pivot axis (21) is preferably aligned parallel to the groove (44) and/or a flange (46, 47), in particular for longitudinal alignment of a profile (45) and/or a support rail.

5. Attachment according to any one of the preceding claims, **characterized in that** the pivot lever (23) starting from a pivot bearing (20) extends away and/or the pivot lever (23) starting from a pivot bearing (20) is longer than the second engaging member (19) for providing a lever mechanism, preferably an end of the pivot lever (23) facing away from the second engaging member (19) and/or the pivot bearing (20) is preferably embodied for releasably fixing the pivot lever (23) in a holding position on the attachment (10).

6. Attachment according to any one of the preceding claims, **characterized in that** associated with the second engaging member (19) is a fixing device (25) for detachably fixing the second engaging member (19) and/or a pivot lever (23) in a holding position for holding the attachment (10) on the groove (44), in particular the fixing device (25) is embodied for producing a releasable connection with the attachment (10), preferably the fixing device (25) is arranged on one end of the pivot lever (23) facing away from the second engaging member (19) and/or from a pivot bearing (20), preferably the fixing device (25) has, for producing a releasable latching connection, a first latching element (26) for interacting with a second latching element (26) of the attachment (10) formed corresponding to the first latching element (26).

7. Attachment according to Claim 6, **characterized in that** the fixing device (25) is connected to the pivot lever (23) by means of a pivot connection and/or an elastic connection (28), preferably in one piece, in particular the fixing device (25) comprises an actuating element (27) for manual release, preferably single-handedly, and/or creation of a connection with the attachment (10) and/or for moving the second engaging member (19), preferably the actuating element (27) and the first latching element (26) of the fixing device (25) extending from the pivot connection and/or the elastic connection (28) in two mutually opposite directions.

8. Attachment according to any one of the preceding claims, **characterized in that** the attachment (10) is of at least two-piece design.

9. Attachment according to Claim 6, wherein the fixing device (25) for fixing the second engaging member (19) in the holding position is locked by means of the functional module (13) against an actuation for releasing and/or pivoting the second engaging member (19), preferably a part of the functional module (13) abuts the fixing device (25) and/or an actuating element (27) of the fixing device (25).

10. Attachment according to any one of the preceding claims, **characterized in that** the functional module (13) is exchangeable.

11. Attachment according to any one of the preceding claims, **characterized in that** the functional module (13) has at least one first plug-in element (40, 41) and the fastening module (12) has at least one second plug-in element (30, 31) corresponding to the first plug-in element (40,41), in particular the functional module (13) has at least one first latching means (34) and the fastening module (12) has a second latching means (33) corresponding to the first latching means (34), preferably the first latching means (34) and/or the second latching means (33) is elastically mounted for releasing the latching connection (15), in particular the elastically mounted first latching means(34) and/or the second latching means (33) has an actuating means (35) for manually releasing the latching connection (15).

12. Attachment according to any one of the preceding claims, **characterized by** at least one functional side (36, 38), in particular a functional module (13) has a multifunctional side (36, 38) facing away from a fastening module (12), in particular the multifunctional side (36, 38) comprises a mounting plate, an add-on element, a holder, an adapter (58), a cable guide, at least one media port, a monitor, a magnetic board, an instrument holder, a tool holder, a pipette holder (57), a drinks holder (59), a box holder (61), a disposal bag holder (63), and/or a soap dispenser holder (64).

13. Fastening system with an attachment (10) according to any one of Claims 1 to 12, comprising a groove (44) for fastening at least one attachment (10), in particular the attachment (10) is held immovably in a holding position of the second engaging member (19) or movably in the longitudinal direction of the groove (44) .

14. Fastening system according to Claim 13, **characterized in that** the groove (44) is integrated in a profile (45), preferably in a support rail and/or in a wall of a functional channel, in particular the profile (45) has an illumination device (70), preferably the profile (45) has, in particular on one side, a light-transparent cover (71) and/or a light source (73) arranged inside the profile (45), in particular the light source (73) is arranged in a chamber (66) of the profile (45) and/or the light source (73) takes the form of an LED strip.

15. Use of an attachment (10) according to any one of Claims 1 to 12 and/or of a fastening system (49) according to either of Claims 13 or 14 in a laboratory, a classroom and/or a restroom, in particular in a research facility, a university and/or a school, preferably for equipping at least one workplace.

## Revendications

1. Dispositif de montage à fixer à une rainure (44), comprenant un dispositif de fixation (11) comprenant au moins un moyen d'engagement (16) pour l'engagement dans la rainure (44), le moyen d'engagement (16) ayant au moins un premier élément d'engagement (17, 18) et au moins un deuxième élément d'engagement (19) mobile, et un palier de pivotement (20) étant prévu pour le pivotement du deuxième élément d'engagement (19), un levier de pivotement (23) étant affecté au deuxième élément d'engagement (19), lequel présente un élément d'actionnement (27), le dispositif de montage (10) étant de conception modulaire et présentant un module fonctionnel (13) et un module de fixation (12), lequel comprend le premier élément d'engagement (17, 18) et le deuxième élément d'engagement (19), le module de fixation (12) et le module fonctionnel (13) pouvant être reliés entre eux de façon détachable au moyen d'une liaison par encliquetage (15) et/ou d'une liaison enfichable (14), **caractérisé en ce que** le deuxième élément d'engagement (19) est fixé dans une position de maintien pour le maintien du dispositif de montage (10) dans la rainure (44) lors d'une liaison du module fonctionnel (13) avec le module de fixation (12).

2. Dispositif de montage selon la revendication 1, **caractérisé en ce que** le premier élément d'engagement (17, 18) est conçu pour un engagement sur l'arrière d'une première traverse (46) et/ou le deuxième élément d'engagement (19) est conçu pour un engagement sur l'arrière d'une deuxième traverse (47), le premier élément d'engagement (17, 18) et/ou le deuxième élément d'engagement (19) est/sont en particulier conçu(s) comme un élément angulaire et/ou en forme de L, des extrémités libres du premier élément d'engagement (17, 18) et du deuxième élément d'engagement (19) étant de préférence, en particulier dans une position de maintien pour le maintien du dispositif de montage (10) dans la rainure (44), opposées l'une à l'autre.

3. Dispositif de montage selon la revendication 1 ou 2, **caractérisé en ce qu'**un profilé (45), de préférence un rail de support et/ou un canal fonctionnel, présente la rainure (44), une première traverse (46) et/ou une deuxième traverse (47), la première traverse (46) et la deuxième traverse (47) se font en particulier face et/ou sont espacées l'une de l'autre pour former la rainure (44), le deuxième élément d'engagement (19) étant de préférence déplaçable en raison d'un pivotement, d'une rotation et/ou d'un décalage.

4. Dispositif de montage selon l'une quelconque des revendications précédentes, **caractérisé en ce que** le palier de pivotement (20) du deuxième élément d'engagement (19) est monté èn rotation sur un axe de pivotement (21), l'axe de pivotement (21) étant de préférence orienté parallèlement à la rainure (44) et/ou à une traverse (46, 47), en particulier à la direction longitudinale d'un profilé (45) et/ou d'un rail de support.

5. Dispositif de montage selon l'une quelconque des revendications précédentes, **caractérisé en ce que** le levier de pivotement (23) s'étend à partir d'un palier de pivotement (20) et/ou le levier de pivotement (23) est, partant d'un palier de pivotement (20), plus long que le deuxième élément d'engagement (19) pour la fourniture d'un mécanisme à levier, une extrémité du levier de pivotement (23) opposée au deuxième élément d'engagement (19) et/ou au palier de pivotement (20) étant de préférence conçue pour la fixation détachable du levier de pivotement (23) dans une position de maintien sur le dispositif de montage (10).

6. Dispositif de montage selon l'une quelconque des revendications précédentes, **caractérisé en ce qu'**un dispositif de fixation (25) pour la fixation détachable du deuxième élément d'engagement (19) et/ou un levier de pivotement (23) dans une position de maintien pour le maintien du dispositif de montage (10) sur la rainure (44) est affecté au deuxième élément d'engagement (19), le dispositif de fixation (25) est en particulier conçu pour l'établissement d'une liaison détachable avec le dispositif de montage (10), le dispositif de fixation (25) est de préférence disposé sur une extrémité du levier de pivotement (23) opposée au deuxième élément d'engagement (19) et/ou au palier de pivotement (20), le dispositif de fixation (25) présentant de préférence un premier élément d'encliquetage (26) pour la coopération avec un deuxième élément d'encliquetage (29) du dispositif de montage (10) conçu pour correspondre au premier élément d'encliquetage (26).

7. Dispositif de montage selon la revendication 6, **caractérisé en ce que** le dispositif de fixation (25) est relié, de préférence d'une pièce, au levier de pivotement (23) au moyen d'une liaison de pivotement et/ou d'une liaison élastique (28), le dispositif de fixation (25) présente en particulier un élément d'actionnement (27) pour le détachement et/ou l'établissement manuel, en particulier d'une main, d'une liaison avec le dispositif de montage (10) et/ou pour le déplacement du deuxième élément d'engagement (19), l'élément d'actionnement (27) et le premier élément d'encliquetage (26) du dispositif de fixation (25) s'étendent de préférence à partir de la liaison de pivotement et/ou de la liaison élastique (28) dans deux directions opposées l'une à l'autre.

8. Dispositif de montage selon l'une quelconque des revendications précédentes, **caractérisé en ce que** le dispositif de montage (10) est conçu en au moins deux parties.

9. Dispositif de montage selon la revendication 6, **caractérisé en ce que** le dispositif de fixation (25) est bloqué, pour la fixation du deuxième élément d'engagement (19), contre un actionnement pour le détachement et/ou le pivotement du deuxième élément d'engagement (19) dans la position de maintien au moyen du module fonctionnel (13), une partie du module de fixation (13) est placée contre le dispositif de fixation (25) et/ou un élément d'actionnement (27) du dispositif de fixation (25).

10. Dispositif de montage selon l'une quelconque des revendications précédentes, **caractérisé en ce que** le module fonctionnel (13) est interchangeable.

11. Dispositif de montage selon l'une quelconque des revendications précédentes, **caractérisé en ce que** le module fonctionnel (13) comprend au moins un premier élément enfichable (40, 41) et le module de fixation (12) comprend au moins un deuxième élément enfichable (30, 31) conçu pour correspondre au premier élément enfichable (40, 41), le module fonctionnel (13) présente en particulier au moins un premier moyen d'encliquetage (34) et le module de fixation (12) présente un deuxième moyen d'encliquetage (33) conçu pour correspondre au premier moyen d'encliquetage (34), le premier moyen d'encliquetage (34) et/ou le deuxième moyen d'encliquetage (33) est de préférence monté de façon élastique pour détacher la liaison par encliquetage (15), le premier moyen d'encliquetage (34) et/ou deuxième moyen d'encliquetage (33) monté élastiquement présente en particulier un moyen d'actionnement (35) pour le détachement manuel de la liaison par encliquetage (15).

12. Dispositif de montage selon l'une quelconque des revendications précédentes, **caractérisé par** au moins une face multifonctionnelle (36, 38), un module fonctionnel (13) comprend en particulier une face multifonctionnelle (36, 38) opposée au module de fixation (12), la face multifonctionnelle (36, 38) présente en particulier une plaque de montage, un élément de montage, un support, un adaptateur (58), un guidage de câbles, au moins un raccord de milieu, un moniteur, un tableau magnétique, un support d'instrument, un porte-outil, un porte-pipette (57), un porte-gobelet (59), un support pour haut-parleurs (61), un support de sac à déchets (63) et/ou un support de distributeur de savon (64).

13. Système de fixation comprenant un dispositif de montage (10) selon l'une quelconque des revendications 1 à 12, comprenant une rainure (44) pour la fixation d'un dispositif de montage (10), le dispositif de montage (10) est en particulier maintenu dans une position de maintien du deuxième élément d'engagement (19) de façon stationnaire ou déplaçable dans la direction longitudinale de la rainure (44).

14. Système de fixation selon la revendication 13, **caractérisé en ce que** la rainure (44) est intégrée dans un profilé (45), de préférence dans un rail de support et/ou dans une paroi d'un canal fonctionnel, le profilé (45) présente en particulier un dispositif d'éclairage (70), le profilé (45) comprend de préférence, au moins sur une face, un recouvrement (71) transparent à la lumière et/ou une source de lumière (73) est/sont disposé(e)s à l'intérieur du profilé (45), la source de lumière est en particulier disposée dans une chambre (66) du profilé (45) et/ou la source de lumière (73) est conçue comme une bande DEL.

15. Utilisation d'un dispositif de montage (10) selon l'une quelconque des revendications 1 à 12 et/ou d'un système de fixation (49) selon l'une quelconque des revendications 13 ou 14 dans un laboratoire, une salle de classe et/ou un espace sanitaire, en particulier dans un institut de recherche, une université et/ou une école, de préférence pour l'équipement d'au moins une station de travail.
